# FASCICULE DE BREVET EUROPEEN

(11) **EP 3 620 852 B1**
(45) Date de publication et mention de la délivrance du brevet: **13.12.2023**
(21) Numéro de dépôt: 18306166.2
(22) Date de dépôt: 04.09.2018
(51) Int. Cl.: G03B 15/00, G03B 35/02, B64D 47/08, G06T 17/00, H04N 23/695, G01C 11/02, B64U 101/30

(54) **PROCÉDÉ DE CAPTURE D'IMAGES AÉRIENNES D'UNE ZONE GÉOGRAPHIQUE, PROCÉDÉ DE CARTOGRAPHIE TRIDIMENSIONNELLE D'UNE ZONE GÉOGRAPHIQUE ET AÉRONEF POUR LA RÉALISATION DE TELS PROCÉDÉS**
LUFTBILDAUFNAHMEVERFAHREN EINER GEOGRAFISCHEN ZONE, 3D-KARTOGRAFIEVERFAHREN EINER GEOGRAFISCHEN ZONE UND LUFTFAHRZEUG ZUR AUSFÜHRUNG DIESES VERFAHRENS
METHOD OF CAPTURING AERIAL IMAGES OF A GEOGRAPHICAL AREA, METHOD FOR THREE-DIMENSIONAL MAPPING OF A GEOGRAPHICAL AREA AND AIRCRAFT FOR IMPLEMENTING SUCH METHODS

(43) Date de publication de la demande: 11.03.2020
(73) Titulaire: Sensefly S.A., 1033 Cheseaux-sur-Lausanne (CH)
(72) Inventeur: Charlaix, Jean-Christophe, 1033 Cheseaux-sur-Lausanne (CH); Mazin, Babtiste, 1803 Chardonne (CH); Bontemps, Alexandre, 01170 Gex (FR); Courroux, Sébastien, 1674 Montet Glane (CH); Zaugg, Raphael, 1007 Lausanne (CH); Gervaix, François, 1007 Lausanne (CH)
(74) Mandataire: Lavoix

(56) Documents cités:
- US-A1- 2014 267 590
- US-A1- 2014 300 736
- US-A1- 2016 144 977
- US-A1- 2016 229 555
- US-B1- 6 477 326
- US-B1- 8 687 062

## Description

La présente invention concerne le domaine de la capture d'images aériennes d'une zone géographique à l'aide d'un aéronef autopiloté, pour le calcul d'une cartographie en trois dimensions de la zone géographique.

Il est possible de capturer des images aériennes d'une zone géographique à l'aide d'au moins un appareil de capture d'image embarqué sur un aéronef à voilure fixe autopiloté pour établir une cartographie en trois dimensions de la zone géographique.

Pour réaliser la capture d'images aériennes, l'aéronef à voilure fixe survole la zone géographique suivant des lignes de vol rectilignes en prenant des images aériennes de la zone géographique. L'aéronef suit par exemple un plan de vol composé de lignes de vol rectilignes distinctes parallèles, en effectuant des demi-tours entre les lignes de vol, de manière à couvrir l'ensemble de la zone géographique.

Il est possible de disposer un appareil de capture d'image sur l'aéronef à voilure fixe orienté de manière que l'axe optique de l'appareil de capture d'image est dirigé sensiblement verticalement vers le bas lorsque l'aéronef vol en ligne droite et sensiblement horizontalement (orientation nadir). Cependant, les images capturées contiennent peu de données sur les surfaces inclinées ou verticales de la zone géographique, et la reconstruction tridimensionnelle de la zone géographique est peu précise. Cela peut s'avérer problématique notamment pour les zones géographiques situées en ville ou présentant des reliefs prononcés, comme une zone montagneuse par exemple.

Il est possible de disposer un ou plusieurs appareils de capture d'image sur l'aéronef à voilure fixe, chaque appareil de capture d'image ayant une orientation oblique de son axe optique, i.e. inclinée par rapport à la verticale et à l'horizontale. De telles images permettent d'obtenir des informations concernant des surfaces verticales de la zone géographique.

Il est aussi possible de prendre des images avec un appareil de capture d'image monté sur l'aéronef avec une orientation nadir et en outre un ou plusieurs appareils de capture d'image avec des orientations obliques, et de combiner ces images pour une reconstruction tridimensionnelle.

US8687062B1 et US2014/0267590A1 divulguent chacun la capture d'images aériennes avec des appareils de capture d'image avec des orientations obliques, éventuellement en combinaison avec un appareil de capture d'image avec une orientation nadir.

US2016/144977A1 divulgue un aéronef muni d'un premier dispositif de capture d'image qui est monté fixe sur l'aéronef, une correction de l'attitude de l'aéronef étant réalisée par traitement des images capturées par ce premier dispositif de capture d'images fixe, et en outre d'un deuxième dispositif de capture d'images qui est monté orientable sur l'aéronef pour et qui sert à la poursuite de points d'intérêt préalablement identifiés.

Un des buts de l'invention est de proposer un procédé de cartographie tridimensionnelle d'une zone géographique qui soit facile à mettre en oeuvre tout en permettant de réaliser une reconstruction tridimensionnelle précise.

A cet effet, l'invention propose un procédé de cartographie tridimensionnelle d'une zone géographique selon la revendication 1.

La capture au cours d'un même survol de la zone géographique d'une première série d'images et d'une deuxième série d'image en positionnant l'appareil de capture d'image selon une première séquence et une deuxième séquence de positions angulaires contenant des positions angulaires distinctes permet d'adapter l'orientation de l'appareil de capture d'image au cours du survol de la zone géographique en fonction du relief de la zone géographique.

Le changement de séquence de position(s) angulaire(s) de l'appareil de capture d'image est par exemple prédéterminé avant le vol en fonction du relief de la zone géographique ou déterminée au cours du vol en fonction du relief de la zone géographique et/ou des images déjà capturées.

Le changement de séquence de position(s) angulaire(s) de l'appareil de capture d'image consiste par exemple à passer d'une séquence à une seule position angulaire (i.e. une position angulaire fixe) à une autre séquence à une seule position angulaire ou à une séquence à au moins deux positions angulaires distinctes, ou à passer d'une séquence à au moins deux positions angulaires distinctes à une séquence à une seule position angulaire ou à une autre séquence à au moins deux positions angulaires distinctes.

L'adaptation de la position angulaire de l'appareil de capture d'image en fonction du relief permet d'optimiser la précision de la reconstruction tridimensionnelle en limitant le nombre d'images capturées.

Des caractéristiques optionnelles du procédé de cartographie tridimensionnelle sont définies aux revendications 1 à 14.

L'invention concerne encore un aéronef autopiloté selon la revendication 15.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique d'un ensemble de capture d'images aériennes d'une zone géographique comprenant un aéronef équipé d'un appareil de capture d'image ;
- la Figure 2 est une vue schématique de l'aéronef équipé d'un appareil de capture d'image
- la Figure 3 est une vue partielle schématique de dessous de l'aéronef montrant l'appareil de capture d'image embarqué sur l'aéronef ; et
- les Figures 4 à 6 sont des schémas illustrant différent scénarios de capture d'images aériennes.

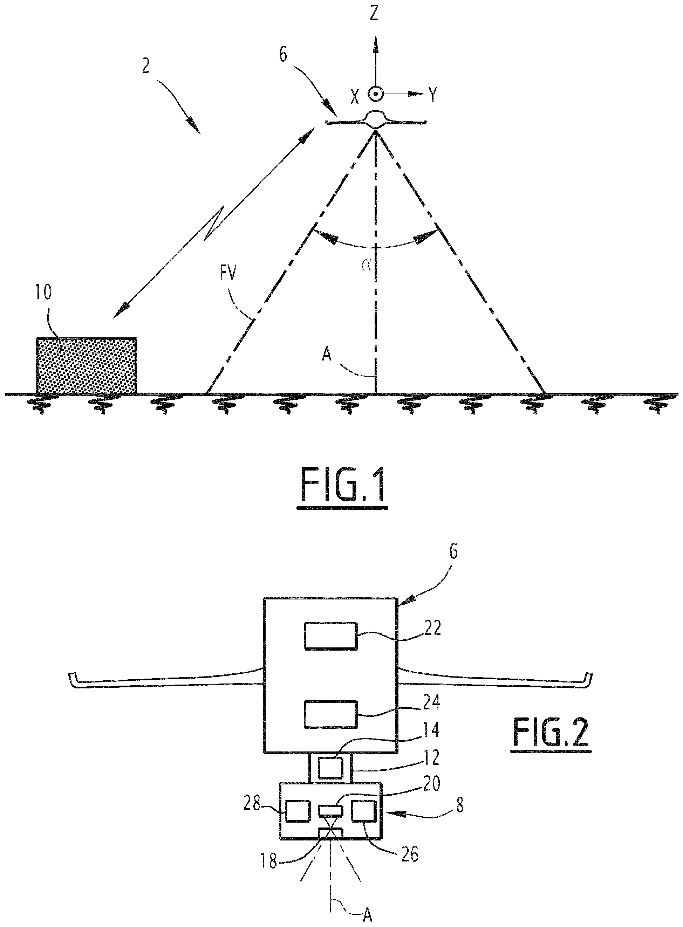

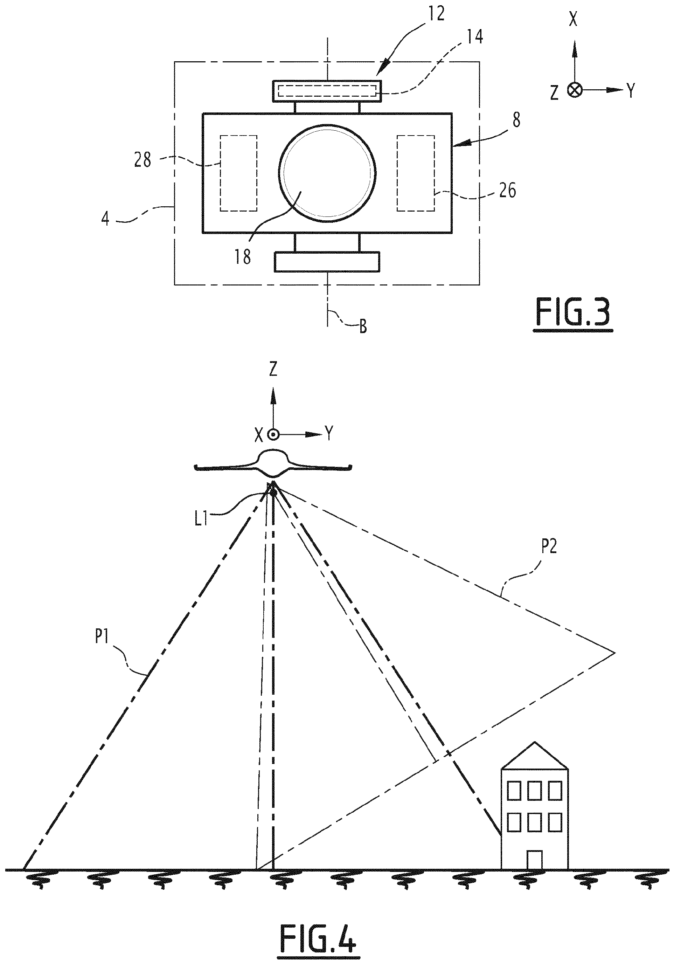

L'ensemble 2 représenté sur les Figures 1 à 3 comprend un aéronef 6 équipé d'un appareil capture d'image 8 (Figures 2 et 3) monté sur l'aéronef 6 pour la prise d'image aériennes d'une zone géographique lorsque l'aéronef 6 est en vol.

L'aéronef 6 est par exemple un aéronef à voilure fixe.

L'aéronef 6 est autopiloté. Par « autopiloté », on entend que l'aéronef 6 est configuré pour voler de manière autonome en suivant un plan de vol déterminé, en particulier sans intervention d'un pilote humain pour suivre le plan de vol.

De préférence, l'aéronef 6 est sans présence humaine à bord, en particulier sans pilote humain à bord. Un tel aéronef est généralement désigné par le terme « drone » ou par l'acronyme UAV pour « Unmanned Aerial Vehicle » en anglais.

Dans la suite de la description, les termes « vertical », « horizontal », « haut », « bas », « droite » et « gauche » s'entendent par rapport au repère orthogonal usuel de l'aéronef 6, le repère orthogonal possédant, lorsque l'aéronef 6 vole horizontalement en ligne droite, un axe de roulis X dirigé horizontalement de l'arrière vers l'avant, un axe de tangage Y orienté horizontalement de la droite vers la gauche et un axe de lacet Z orienté du bas vers le haut.

Dans un exemple de réalisation, l'ensemble 2 comprend une station de contrôle 10 pour contrôler l'aéronef 6 à distance. La station de contrôle 8 est par exemple située au sol. De manière connue en soi, l'aéronef 6 et la station de contrôle 10 sont configurés pour communiquer à distance l'un avec l'autre, par exemple par ondes radiofréquences.

La station de contrôle 10 permet par exemple de contrôler à distance le fonctionnement de l'aéronef 6, de contrôler le suivi du plan de vol par de l'aéronef 6, d'envoyer une mise à jour de plan de vol de l'aéronef 6 au cours du vol et/ou de récupérer des images collectées par l'appareil de capture d'image 8 monté sur l'aéronef 6 au cours du vol.

L'appareil de capture d'image 8 présente un axe de visée ou axe optique A. L'axe optique A de l'appareil de capture d'image 8 est l'axe suivant lequel l'appareil de capture d'image 8 capture des images.

L'appareil de capture d'image 8 est monté sur l'aéronef 6 de manière que l'axe optique A présente une composante verticale et est orienté vers le bas lorsque l'aéronef 6 vole horizontalement et en ligne droite. Ainsi, l'appareil de capture d'image 8 est propre à capturer des images aériennes de la zone géographique survolée par l'aéronef 6.

L'appareil de capture d'image 8 est monté mobile en rotation par rapport à l'aéronef 6 autour d'un axe de rotation B. Ceci permet de modifier la position angulaire ou l'orientation de l'appareil de capture d'image 8 par rapport à l'aéronef 6, pour capturer des images dans différences directions à partir de l'aéronef 6.

De préférence, l'axe de rotation B est contenu dans un plan défini par l'axe de lacet Z et l'axe de roulis X, l'axe de rotation B définissant avec l'axe de roulis un angle inférieur à 15°, en particulier inférieur à 10°. Dans un exemple de réalisation, l'axe de roulis X et l'axe de rotation B sont parallèles, en particulier confondus.

Dans un exemple de réalisation, l'axe de rotation B est sensiblement perpendiculaire à l'axe optique A de l'appareil de capture d'image 8.

Dans une position centrée de l'appareil de capture d'image 8, l'axe optique A est contenu dans le plan défini par l'axe de lacet Z et l'axe de roulis X. Ainsi, l'appareil de capture d'image 8 peut prendre une image sensiblement à l'aplomb de l'aéronef 6, l'axe optique A étant proche de la verticale. Lorsque l'axe optique A est vertical, la position centrée correspond à une orientation nadir.

Lorsque l'appareil de capture d'image 8 est pivoté autour de l'axe de rotation B par rapport à la position centrée, l'appareil de capture d'image 8 peut capturer une image aérienne d'une région sur le côté de l'aéronef 6, à droite ou à gauche de l'aéronef 6. L'appareil de capture d'image 8 est alors dans une position dite « oblique » ou une orientation oblique.

Dans un exemple réalisation, l'amplitude angulaire de rotation de l'appareil de capture d'image 8 par rapport à l'aéronef 6 autour de l'axe de rotation B est de +/- 45° autour de la position centrée.

Le champ de vision FV de l'appareil de capture d'image 8 est notamment fonction de l'angle d'ouverture α de l'appareil de capture d'image 8.

L'angle d'ouverture α de l'appareil de capture d'image 8 est de préférence égal ou supérieur à l'amplitude angulaire de rotation de l'appareil de capture d'image 8 autour de l'axe de rotation B.

Ainsi, une image capturée avec l'appareil de capture d'image 8 orienté avec son axe optique A oblique aura un recouvrement avec une image capturée avec l'appareil de capture d'image 8 dans la position neutre, et ce sur toute l'amplitude angulaire de rotation de l'appareil de capture d'image 8.

Comme illustré sur les Figures 2 et 3, l'appareil de capture d'image 8 est monté sur l'aéronef 6 par l'intermédiaire d'un dispositif de montage 12 permettant la rotation de l'appareil de capture d'image 8 par rapport à l'aéronef 6 autour de l'axe de rotation B et comprenant au moins un actionneur 14, par exemple un moteur électrique, pour entraîner l'appareil de capture d'images 8 en rotation autour de l'axe de rotation B par rapport à l'aéronef 6.

L'appareil de capture d'image 8 possède un objectif optique 18 et un capteur photosensible 20 pour capturer des images. Le capteur photosensible est par exemple un capteur matriciel. L'appareil de capture d'image 8 possède un centre optique O.

L'aéronef 6 comprend un pilote automatique 22 configuré pour piloter l'aéronef 6 de manière autonome. Le pilote automatique 22 est configuré notamment pour commander les gouvernes de l'aéronef 6 et/ou un système de propulsion de l'aéronef 6, en particulier en fonction d'un plan de vol à suivre pour la capture d'images aériennes d'une zone géographique.

Avantageusement, l'aéronef 6 est muni d'un récepteur de géolocalisation 24 configuré pour déterminer la position géographique de l'aéronef 6 en fonction de signaux de géolocalisation émis par des satellites d'un système de géolocalisation par satellites, par exemple le de géolocalisation GPS, GALILEO ou GLONASS.

De préférence, le pilote automatique 22 est configuré pour piloter l'aéronef 6 automatiquement en fonction de données de géolocalisation de l'aéronef 6 fournies par le récepteur de géolocalisation 24 et d'un plan de vol déterminé.

Dans un exemple de réalisation, l'aéronef 6 équipé de l'appareil de capture d'image 8 comprend un module de commande 26 configuré pour déclencher la capture d'images par l'appareil de capture d'image 8 et pour commander la position angulaire de l'appareil de capture d'image 8 par rapport à l'aéronef 6. Pour commander la position angulaire, le module de commande 26 est ici configuré pour commander le ou chaque actionneur 14.

Le module de commande 26 est par exemple intégré à l'appareil de capture d'image 8

Avantageusement, l'aéronef 6 équipé de l'appareil de capture d'image 8 est configuré pour la mesure de l'orientation absolue de l'appareil de capture d'image 8, i.e. son orientation dans le référentiel terrestre.

Dans un exemple de réalisation, l'appareil de capture d'image 8 est équipé d'une centrale inertielle 28 (ou IMU pour «Inertial Measurment Unit » en anglais). La centrale inertielle 28 disposée sur l'appareil de capture d'image 8 est apte à fournir des mesures représentatives de l'orientation absolue de l'appareil de capture d'image 8, quelle que soit la position relative de l'appareil de capture d'image 8 et de l'aéronef 6.

De préférence, l'aéronef 6 équipé de l'appareil de capture d'image 8 est configuré pour associer à chaque image capturée des données d'orientation absolue de l'appareil de capture d'image 8 à l'instant de capture de cette image capturée et/ou pour associer à chaque image des données de géolocalisation de l'appareil de capture d'image 8. Ces données d'orientation et de géolocalisation son utiles pour une reconstruction tridimensionnelle de la zone géographique à partir des images capturées.

L'aéronef 6 équipé de l'appareil de capture d'image 8 est par exemple configuré pour calculer les données de géolocalisation de l'appareil de capture d'image 8 à partir de la position géographique de l'aéronef 6 déterminée par le récepteur de géolocalisation 24.

Avantageusement les données de géolocalisation de l'appareil de capture d'image 8 associées à chaque image capturée sont relatives à la position géographique du centre optique O de l'appareil de capture d'image 8. Ceci permet une cartographie tridimensionnelle précise.

De préférence, la position du centre optique O de l'appareil de capture d'image 8 est fixe par rapport à l'aéronef 6 lorsque l'appareil de capture d'image 8 est pivoté autour de l'axe de rotation B par rapport à l'aéronef 6. Pour ce faire le centre optique O est par exemple situé sur l'axe de rotation B.

L'aéronef 6 équipé de l'appareil de capture d'image 8 est configuré pour capturer des images en fonction du plan de vol suivi par l'aéronef 6 et d'instructions de capture d'image définissant la position angulaire de l'appareil de capture d'image 8.

L'aéronef 6 équipé de l'appareil de capture d'image 8 est configuré pour permettre, au cours du survol de la zone géographique, une variation de la ou des position(s) angulaire(s) adoptées par l'appareil de capture d'image 8 pour les captures d'images, de manière prédéterminée avant le survol de la zone géographique ou de manière déterminée au cours du survol de la zone géographique, de façon que des images soient prise en positionnant l'appareil de capture d'image 8 par rapport à l'aéronef 6 d'une certaine façon dans une partie du plan de vol, et que des images soient prise en positionnant l'appareil de capture d'image 8 par rapport à l'aéronef 6 d'une autre façon dans une autre partie du plan de vol.

En particulier, l'aéronef 6 équipé de l'appareil de capture d'image 8 est configuré pour, successivement au cours du survol de la zone géographique :
- capturer une première série d'images en positionnant l'appareil de capture d'image de manière itérative suivant une première séquence de position(s) angulaire(s) incluant une seule position angulaire ou au moins deux positions angulaires distinctes, une image respective étant capturée pour chaque position angulaire de la première séquence à chaque itération de la séquence ; puis
- capturer une deuxième série d'images en positionnant l'appareil de capture d'image de manière itérative suivant une deuxième séquence de position(s) angulaire(s) incluant une seule position angulaire ou au moins deux positions angulaires distinctes, une image respective étant capturée pour chaque position angulaire de la deuxième séquence à chaque itération de la séquence, la deuxième séquence incluant au moins une position angulaire distincte de chaque position angulaire de la première séquence.

« De manière itérative » signifie qu'une séquence est répétée plusieurs fois successivement au cours de la capture d'une série d'image correspondante.

Ainsi, la première séquence est répétée plusieurs fois au cours de la capture de la première série d'images, avant de passer à la deuxième séquence qui est répétée plusieurs fois au cours de la capture de la deuxième série d'images.

L'itération d'une séquence de position(s) angulaire(s) comprenant une seule position angulaire revient à prendre toutes les images de la série d'image avec la même position angulaire de l'appareil de capture d'image 8.

L'itération d'une séquence de position(s) angulaire(s) comprenant au moins deux positions angulaires distinctes revient à positionner l'appareil de capture d'image successivement dans chaque position angulaire de la séquence de positions angulaires en capturant une image à chacune de ces positions angulaires, puis à répéter cette opération plusieurs fois de suite.

Un procédé de capture d'images aériennes d'une zone géographique à l'aide de l'ensemble 2 de capture d'images aériennes va maintenant être décrit en référence aux Figures 1 à 3.

Dans une étape de préparation, l'utilisateur définit un plan de vol de l'aéronef 6 permettant de survoler la zone géographique dont on souhaite obtenir des images aériennes, par exemple pour réaliser une cartographie tridimensionnelle de la zone géographique.

L'utilisateur définit aussi une première séquence de position(s) angulaire(s) pour la capture d'une première série d'images par l'appareil de capture d'image 8 par rapport à l'aéronef 6. Le plan de vol et la première séquence de position(s) angulaire(s) sont par exemple transmis à l'aéronef 6 par l'intermédiaire de la station de contrôle 10, avant le décollage ou après le décollage de l'aéronef 6.

Le plan de vol comprend par exemple une succession des lignes de vol rectilignes avec des virages pour passer d'une ligne de vol rectiligne à la suivante. Il est en effet difficile de capturer des images à partie de l'aéronef 6 à voilure fixe lorsqu'il effectue un virage et qu'il est fortement incliné autour de son axe de roulis X.

Ensuite, au cours du survol de la zone géographique, l'aéronef 6 exécute le plan de vol pendant que l'appareil de capture d'image 8 capture une image pour chaque position angulaire de la première séquence, et pour chaque itération de la première séquence.

Selon le procédé de capture d'image aériennes, au cours du survol de la zone géographique, l'appareil de capture d'image 8 capture une deuxième série d'images en positionnant l'appareil de capture d'image de manière itérative suivant une deuxième séquence de position(s) angulaire(s) incluant une seule position angulaire ou au moins deux positions angulaire distinctes, une image respective étant capturée pour chaque position angulaire de la deuxième séquence à chaque itération de la séquence, la deuxième séquence incluant au moins une position angulaire distincte de chaque position angulaire de la première séquence.

De préférence, la première séquence de position(s) angulaire(s) est prédéterminée avant le vol, par exemple en fonction de la zone géographique observée, en particulier en en fonction du relief de la zone géographique observée.

Dans un exemple de réalisation, la deuxième séquence de position(s) angulaire(s) est prédéterminée avant le vol. Ceci permet par exemple de modifier la position angulaire de l'appareil de capture d'image 8 de manière prédéterminée avant le vol, par exemple en fonction du relief de la zone géographique connu à l'avance.

Des positions angulaires dans lesquelles l'axe optique A est oblique pour prendre des images sur le côté de l'aéronef 6 permettent d'obtenir plus de données sur des parois inclinées ou verticales présente sur le côté de l'aéronef 6 que la position centrée de l'appareil de capture d'image 8 dans laquelle l'axe optique A.

Dans un autre exemple de réalisation, la deuxième séquence de position(s) angulaire(s) est déterminée au cours du vol. Ceci permet par exemple de tenir compte d'images capturées de la première série d'images pour adapter au cours du vol l'orientation de l'appareil de capture d'image 8 en fonction du relief de la zone géographie survolée.

La deuxième séquence de position(s) angulaire(s) est par exemple communiquée à l'aéronef 6 équipé de l'appareil de capture d'image 8 au cours du vol, par exemple par l'intermédiaire de la station de contrôle 10.

Les images de la première série d'images sont par exemple transmises à la station de contrôle 10 au cours du vol en vue de leur inspection par l'opérateur, qui peut alors transmettre à l'aéronef 6 une deuxième séquence de position(s) angulaire(s), l'aéronef 6 étant alors configuré pour capturer les images en positionnant désormais l'appareil de capture d'image 8 selon cette deuxième séquence de position(s) angulaire(s).

Une séquence de position(s) angulaire(s) peut être constituée d'une seule position angulaire. Dans ce cas, en pratique, l'appareil de capture d'image 8 est maintenu dans la même position angulaire pour toutes les images de la série d'images.

Une séquence de position(s) angulaire(s) peut comprendre au moins deux positions angulaires distinctes. La séquence de position(s) angulaire(s) peut être formée d'une succession de positions angulaires toutes distinctes ou d'une succession de position angulaires incluant plusieurs fois au moins une même position angulaire.

Si la séquence de position(s) angulaire(s) comprend exactement deux positions angulaires distinctes S1 et S2, la série de positions angulaires est par exemple obtenue en répétant la séquence S1, S2...D'autres séquences sont envisageables, par exemple S1, S2, S2, S1.

Si la séquence de position(s) angulaire(s) comprend exactement trois positions angulaires distinctes S1, S2 et S3, la série de positions angulaires est par exemple obtenue en répétant la séquence S1, S2, S3...D'autres séquences sont envisageables, par exemple S1, S2, S3, S2.

De préférence, lorsque la première séquence de position(s) angulaire(s) comprend au moins deux positions angulaires distinctes, chacune de ces positions angulaires distinctes est présente une seule fois dans la première séquence.

De préférence également, lorsque la deuxième séquence de position(s) angulaire(s) comprend au moins deux positions angulaires distinctes, chacune de ces positions angulaires distinctes est présente une seule fois dans la première séquence.

Ceci permet de limiter le nombre d'images capturées et donc le nombre d'images à traiter, tout en ayant des données suffisantes, et notamment des recouvrements suffisants entre les différentes images capturées, notamment compte tenu du déplacement de l'aéronef entre deux captures successives.

Dans un exemple de mise en oeuvre, la première série d'images et la deuxième série d'images sont capturées au cours du déplacement de l'aéronef 6 suivant une même ligne de vol rectiligne. Ceci permet par exemple de modifier l'orientation de l'appareil de capture d'image 8 de manière planifiée avant le vol ou au cours du vol pour tenir compte d'un changement de type de relief le long de ligne de vol rectiligne ou pour corriger l'orientation de l'appareil de capture d'image au cours du vol.

Dans un exemple de réalisation la première série d'images et la deuxième série d'images sont capturées au cours du déplacement de l'aéronef 6 suivant respectivement une première ligne de vol rectiligne et une deuxième ligne de vol rectiligne distinctes. Ceci permet de tenir compte de reliefs différents sous deux lignes de vol distinctes du plan de vol ou de modifier l'orientation de l'appareil de capture d'image 8 entre une ligne de vol du plan de vol et la suivante.

Dans un exemple de mise en oeuvre, la première séquence de position(s) angulaire(s) comprend la position angulaire centrée. En option ou en variante, la première séquence de position(s) angulaire(s) comprend au moins une position angulaire oblique.

Dans un exemple de mise en oeuvre, la deuxième séquence de position(s) angulaire(s) comprend la position angulaire centrée. En option ou en variante, la deuxième séquence de position(s) angulaire(s) comprend au moins une position angulaire oblique.

La ou les position(s) angulaire(s) de l'appareil de capture d'image 8 choisies pour une première série d'images et une deuxième série d'images peuvent varier en fonction des applications qui sont très variées.

Les Figures 4 à 6 illustrent des positions angulaires possibles pour certaines applications particulières, chaque position angulaire de l'appareil de capture d'image 8 étant symbolisée par un élément graphique P formé d'un triangle isocèle et représentant son champ de vision FV, et d'une hauteur du triangle isocèle représentant l'axe optique A, un indice étant ajouté à chaque référence P pour distinguer les différentes positions angulaires.

Sur la Figure 4, l'aéronef 6 est représenté comme se déplaçant sur une ligne de vol rectiligne, en se dirigeant vers l'observateur. Le procédé de capture d'images aériennes comprend par exemple la capture d'une première série d'images avec l'appareil de capture d'image 8 positionné suivant une première séquence de position(s) angulaire(s) comprenant une seule position angulaire, ici la position centrée P1.

S'il apparaît que des surfaces inclinées sont présentes sur le côté de l'aéronef 6, ici le côté gauche de l'aéronef 6, en particulier des surfaces verticales de bâtiments, le procédé comprend par exemple la prise d'une deuxième série d'images en positionnant l'appareil de capture d'image 8 suivant une deuxième séquence de position(s) angulaire(s) comprenant en outre une position angulaire oblique à gauche P2 de l'aéronef 6, par exemple en positionnant l'appareil de capture d'image 8 suivant la deuxième séquence de position(s) angulaire(s) P1, P2.

Ceci permet d'obtenir à la fois des images de la zone géographique située sous l'aéronef avec une orientation nadir (position centrée P1) et des images donnant des données sur les surfaces inclinées situées à gauche de l'aéronef 6 (position oblique à gauche P2). Le passage de la première série d'image à la deuxième série d'image est planifié avant le vol ou déterminé au cours du vol de l'aéronef.

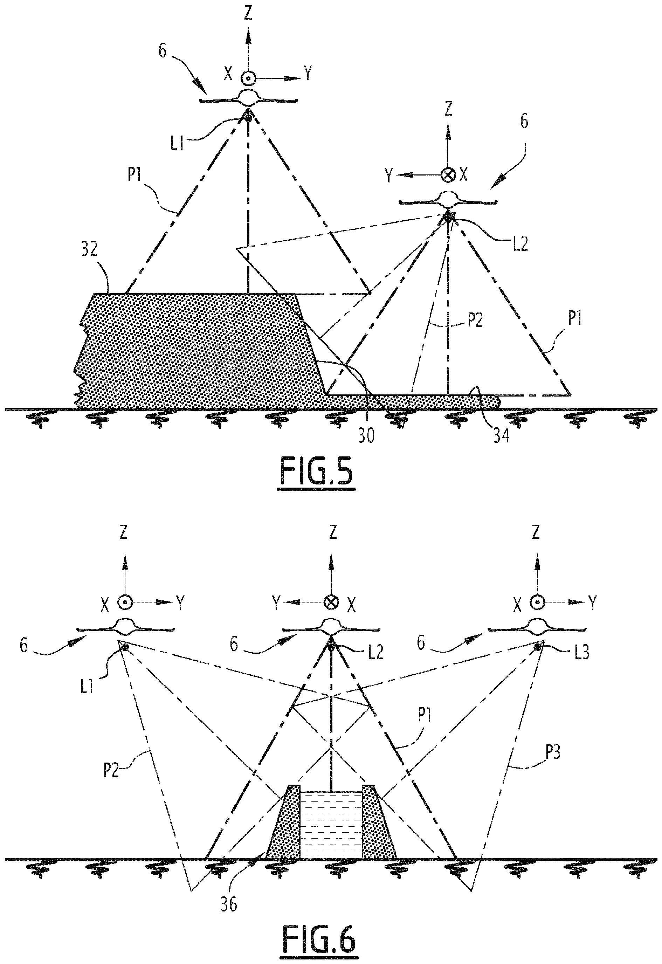

Sur la Figure 5, l'aéronef 6 est utilisé pour capturer des images aériennes d'une zone géographique incluant une falaise ou un ressaut 30 entre une partie haute 32 et une partie basse 34.

Le plan de vol présente une première ligne de vol L1 passant au-dessus de la partie basse dans un sens (ici vers l'observateur) et une deuxième ligne de vol L2 passant au-dessus de la partie basse parallèlement à la première ligne de vol L1 et en sens opposé (ici à l'opposé de l'observateur).

Le procédé de capture d'images aériennes comprend par exemple la capture d'une première série d'images le long de la première ligne de vol L1 en positionnant l'appareil de capture d'image 8 selon une première séquence de position(s) angulaire(s) comprenant une seule position angulaire, à savoir la position centrée P1, et la capture d'une deuxième série d'images le long de la deuxième ligne de vol L2 en positionnant l'appareil de capture d'image 8 suivant une deuxième séquence de positions angulaires incluant deux positions angulaires, à savoir la position centrée P1 et la position angulaire oblique à gauche P2 permettant de voir le ressaut 30, par exemple selon la séquence de positions angulaires P1, P2.

La deuxième série d'images permet de voir simultanément la partie basse 34 et le ressaut 30 lors d'un même passage. La première série d'images est prise en maintenant l'appareil de capture d'image 8 dans la même orientation et en limitant le nombre d'images capturées et donc le nombre d'images à analyser. Une prise d'image oblique le long de première ligne de vol L1 ne permettrait pas d'obtenir des données pertinentes relativement au ressaut 30.

Sur la Figure 6, l'aéronef 6 est utilisé pour capturer des images d'une partie saillante 36 allongée d'une zone géographique, ici un canal.

Le plan de vol présente trois lignes de vol rectilignes et parallèles incluant une première ligne de vol L1 passant latéralement d'un côte de la partie saillante 36 dans un premier sens (ici vers l'observateur) et une deuxième ligne de vol L2 passant au-dessus de la partie saillante 36 et dans un deuxième sens opposé au premier sens (ici à l'opposé de l'observateur) et une troisième ligne de vol L3 passant latéralement de l'autre côte de la partie saillante 36 et dans le premier sens (ici vers l'observateur).

Le procédé de capture d'images aériennes comprend par exemple la capture d'une première série d'images le long de la première ligne de vol en positionnant l'appareil de capture d'image 8 suivant une première séquence de position(s) angulaire(s) incluant une seule position angulaire, à savoir la position angulaire oblique à gauche P2, la capture d'une deuxième série d'images le long de la deuxième ligne de vol en positionnant l'appareil de capture d'image 8 suivant une deuxième séquence de position(s) angulaire(s) incluant une seule position angulaire, ici la position centrée P1, et la capture d'une troisième série d'images la long de la troisième ligne de vol L3 en positionnant l'appareil de capture d'image 8 suivant une troisième séquence de position(s) angulaire(s) incluant une seule position angulaire, à savoir une position angulaire oblique à droite P3.

Ce procédé permet de capturer des images des deux faces latérales et de la face supérieure de la partie saillante 36 en obtenant des données précises, en particulier pour la réalisation d'une cartographie tridimensionnelle, en limitant le nombre d'images capturées et à traiter.

En variante, la première série d'images est réalisée en positionnant l'appareil de capture d'image 8 suivant une première séquence de positons angulaires incluant la position centrée et la position oblique vers la gauche et/ou la troisième série d'images est réalisée en positionnant l'appareil de capture d'image 8 suivant une troisième séquence de positons angulaires incluant la position centrée et la position oblique vers la droite.

Ceci permet de prendre en même temps des images des régions latérales 38 adjacentes à la partie saillante 36.

Pendant la capture des séries d'images, le procédé de captures d'images aériennes comprend la mesure de l'orientation absolue de l'appareil de capture d'image 8 pour chaque image capturée, ici à l'aide de la centrale inertielle 22 montée sur l'appareil de capture d'image 8.

Le procédé comprend également la mesure de la position géographique de l'appareil de capture d'image pour chaque image capturée, à l'aide d'un récepteur de géolocalisation.

Le récepteur de géolocalisation 24 est ici porté par l'aéronef 6 et fournit la position géographique du l'aéronef 6, la position géographique de l'appareil de capture d'image 8 associée à chaque image capturée étant calculée à partir de la position géographique de l'aéronef 6 et de la position du centre optique O de l'appareil de capture d'image 8 par rapport à l'aéronef 6.

Les images capturées sont enregistrées en associant chaque image capturée à la position angulaire correspondante de l'appareil de capture d'image 8 et/ou la position géographique correspondante de l'appareil de capture d'image 8.

Les images aériennes de la zone géographique sont utilisées pour réaliser une cartographique tridimensionnelle de la zone géographique, par exemple par photogrammétrie.

Ainsi, un procédé de cartographie tridimensionnelle d'une zone géographique comprend la capture d'images de la zone géographique selon un procédé de capture d'images aériennes tel que défini ci-dessus et le calcul d'une cartographique tridimensionnelle de la zone géographique à partir des images aériennes capturées, par exemple par photogrammétrie.

La capture de séries d'images aériennes au cours d'un même survol de la zone géographique par l'aéronef 6 transportant l'appareil de capture d'image 8 en utilisant des positions angulaires différentes de l'appareil de capture d'image 8 d'une série d'images aériennes à l'autre permet de prendre des images adaptées aux reliefs rencontrés dans la zone géographique et d'obtenir des données permettant une cartographie tridimensionnelle satisfaisante tout en limitant le nombre d'images capturées et traitées.

La limitation du nombre d'images capturées permet d'économiser de l'énergie pendant le vol, de limiter la quantité d'image à télétransmettre entre l'aéronef 6 et une station de contrôle 6 et de limiter les ressources et/ou le temps de traitement des images capturées pour calculer une cartographie tridimensionnelle.

## Revendications

1. Procédé de cartographie tridimensionnelle d'une zone géographique, comprenant la capture d'images aériennes d'une zone géographique à l'aide d'un aéronef (6) autopiloté suivant un plan de vol prédéterminé et d'un appareil de capture d'image (8) monté sur l'aéronef en étant mobile par rapport à l'aéronef (6) autour d'un axe de rotation (B) pour permettre de modifier une position angulaire de l'appareil de capture d'image (8) par rapport à l'aéronef (6), le procédé comprenant, au cours d'un seul survol de la zone géographique par l'aéronef :
- la capture d'une première série d'images en positionnant l'appareil de capture d'image (8) par rapport à l'aéronef (6) de manière itérative suivant une première séquence de position(s) angulaire(s) incluant une seule position angulaire ou au moins deux positions angulaires distinctes, une image respective étant capturée pour chaque position angulaire de la première séquence à chaque itération de la séquence ; puis
- la capture d'une deuxième série d'images en positionnant l'appareil de capture d'image (8) par rapport à l'aéronef (6) de manière itérative suivant une deuxième séquence de position(s) angulaire(s) incluant une seule position angulaire ou au moins deux positions angulaires distinctes, une image respective étant capturée pour chaque position angulaire de la deuxième séquence à chaque itération de la séquence, la deuxième séquence incluant au moins une position angulaire distincte de chaque position angulaire de la première séquence,
le procédé comprenant le calcul d'une cartographique tridimensionnelle de la zone géographique à partir des images capturées.

2. Procédé de cartographie tridimensionnelle selon la revendication 1, dans lequel l'aéronef (6) est à voilure fixe.

3. Procédé de cartographie tridimensionnelle selon la revendication 1 ou la revendication 2, dans lequel l'angle de rotation (B) est contenu dans un plan défini par l'axe de lacet (Z) et l'axe de roulis (X) de l'aéronef (6), l'angle de rotation (B) définissant un angle inférieur à 15° avec l'axe de roulis (X).

4. Procédé de cartographie tridimensionnelle selon l'une quelconque des revendications précédentes, dans lequel la première série d'images et la deuxième série d'images sont capturées au cours du vol de l'aéronef (6) suivant une même ligne de vol rectiligne du plan de vol.

5. Procédé de cartographie tridimensionnelle selon l'une quelconque des revendications précédentes, dans lequel la première série d'images et la deuxième série d'images sont capturées au cours du vol de l'aéronef (6) suivant deux lignes de vol rectilignes distinctes du plan de vol.

6. Procédé de cartographie tridimensionnelle selon l'une quelconque des revendications précédentes, dans lequel la première séquence est prédéterminée avant le vol.

7. Procédé de cartographie tridimensionnelle selon l'une quelconque des revendications précédentes, dans lequel la deuxième séquence est prédéterminée avant le vol.

8. Procédé de cartographie tridimensionnelle selon l'une quelconque des revendications précédentes, dans lequel la deuxième séquence est déterminée au cours du vol.

9. Procédé de cartographie tridimensionnelle selon l'une quelconque des revendications précédentes, dans lequel la deuxième séquence est communiquée à l'aéronef au cours du vol, par exemple à partir d'une station de commande à distance de l'aéronef.

10. Procédé de cartographie tridimensionnelle selon l'une quelconque des revendications précédentes, dans lequel la première séquence comprend une position angulaire centrée dans laquelle un axe optique de l'appareil de capture d'image est situé dans le plan défini par l'axe de lacet et l'axe de roulis et/ou au moins une position angulaire oblique dans laquelle l'axe optique est situé dans un plan oblique faisant un angle non nul avec le plan par l'axe de lacet et l'axe de roulis, et/ou dans lequel la deuxième séquence comprend la position angulaire centrée et/ou au moins une position angulaire oblique.

11. Procédé de cartographie tridimensionnelle selon l'une quelconque des revendications précédentes, dans lequel la première séquence comprend une position angulaire centrée dans laquelle un axe optique de l'appareil de capture d'image est situé dans le plan défini par l'axe de lacet et l'axe de roulis et/ou la deuxième séquence comprend la position angulaire centrée.

12. Procédé de cartographie tridimensionnelle selon l'une quelconque des revendications précédentes, dans lequel la première séquence comprend au moins une position angulaire oblique dans laquelle l'axe optique est situé dans un plan oblique faisant un angle non nul avec le plan par l'axe de lacet et l'axe de roulis, et/ou dans lequel la deuxième séquence comprend au moins une position angulaire oblique.

13. Procédé de cartographie tridimensionnelle selon l'une quelconque des revendications précédentes, comprenant la mesure de l'orientation absolue de l'appareil de capture d'image (8) pour chaque image capturée, de préférence à l'aide d'une centrale inertielle (28) montée sur l'appareil de capture d'image.

14. Procédé de cartographie tridimensionnelle selon l'une quelconque des revendications précédentes, comprenant la mesure de la position géographique de l'appareil de capture d'image (8) pour chaque image capturée, par exemple à l'aide d'un récepteur de géolocalisation (24) embarqué sur l'aéronef (6).

15. Aéronef à voilure fixe autopiloté équipé d'un appareil de capture d'image (8) monté mobile sur l'aéronef autour d'un axe de rotation (B), l'aéronef étant configuré pour la mise en oeuvre d'un procédé de cartographie tridimensionnelle selon l'une quelconque des revendications 1 à 14.

## Patentansprüche

1. Verfahren zur dreidimensionalen Kartierung einer geografischen Zone, umfassend die Aufnahme von Luftbildern einer geografischen Zone mit Hilfe eines selbstfliegenden Luftfahrzeugs (6), das einem vorbestimmten Flugplan folgt, und einer Bildaufnahmevorrichtung (8), die an dem Luftfahrzeug angebracht ist, indem sie in Bezug auf das Luftfahrzeug (6) um eine Drehachse (B) beweglich ist, um zu ermöglichen, eine Winkelposition der Bildaufnahmevorrichtung (8) in Bezug auf das Luftfahrzeug (6) zu ändern, wobei das Verfahren während eines einzelnen Überflugs der geografischen Zone durch das Luftfahrzeug umfasst:
- das Aufnehmen einer ersten Reihe von Bildern durch iteratives Positionieren der Bildaufnahmevorrichtung (8) in Bezug auf das Luftfahrzeug (6) gemäß einer ersten Sequenz von Winkelposition(en), die eine einzelne Winkelposition oder mindestens zwei unterschiedliche Winkelpositionen einschließt, wobei für jede Winkelposition der ersten Sequenz bei jeder Iteration der Sequenz ein jeweiliges Bild aufgenommen wird; dann
- das Aufnehmen einer zweiten Reihe von Bildern durch iteratives Positionieren der Bildaufnahmevorrichtung (8) in Bezug auf das Luftfahrzeug (6) gemäß einer zweiten Sequenz von Winkelposition(en), die eine einzelne Winkelposition oder mindestens zwei unterschiedliche Winkelpositionen einschließt, wobei für jede Winkelposition der zweiten Sequenz bei jeder Iteration der Sequenz ein jeweiliges Bild aufgenommen wird, wobei die zweite Sequenz mindestens eine Winkelposition einschließt, die sich von jeder Winkelposition der ersten Sequenz unterscheidet,
wobei das Verfahren das Berechnen einer dreidimensionalen Kartografie der geografischen Zone aus den aufgenommenen Bildern umfasst.

2. Verfahren zur dreidimensionalen Kartierung nach Anspruch 1, wobei das Luftfahrzeug (6) ein Starrflügelluftfahrzeug ist.

3. Verfahren zur dreidimensionalen Kartierung nach Anspruch 1 oder 2, wobei der Drehwinkel (B) in einer Ebene enthalten ist, die durch die Gierachse (Z) und die Rollachse (X) des Luftfahrzeugs (6) definiert ist, wobei der Drehwinkel (B) einen Winkel von weniger als 15° mit der Rollachse (X) definiert.

4. Verfahren zur dreidimensionalen Kartierung nach einem der vorhergehenden Ansprüche, wobei die erste Reihe von Bildern und die zweite Reihe von Bildern während des Fluges des Luftfahrzeugs (6) entlang derselben geradlinigen Fluglinie des Flugplans aufgenommen werden.

5. Verfahren zur dreidimensionalen Kartierung nach einem der vorhergehenden Ansprüche, wobei die erste Reihe von Bildern und die zweite Reihe von Bildern während des Fluges des Luftfahrzeugs (6) entlang zweier unterschiedlicher geradliniger Fluglinien des Flugplans aufgenommen werden.

6. Verfahren zur dreidimensionalen Kartierung nach einem der vorhergehenden Ansprüche, wobei die erste Sequenz vor dem Flug vorbestimmt wird.

7. Verfahren zur dreidimensionalen Kartierung nach einem der vorhergehenden Ansprüche, wobei die zweite Sequenz vor dem Flug vorbestimmt wird.

8. Verfahren zur dreidimensionalen Kartierung nach einem der vorhergehenden Ansprüche, wobei die zweite Sequenz während des Flugs bestimmt wird.

9. Verfahren zur dreidimensionalen Kartierung nach einem der vorhergehenden Ansprüche, wobei die zweite Sequenz dem Luftfahrzeug während des Fluges, z. B. von einer Fernsteuerungsstation des Luftfahrzeugs, mitgeteilt wird.

10. Verfahren zur dreidimensionalen Kartierung nach einem der vorhergehenden Ansprüche, wobei die erste Sequenz eine zentrierte Winkelposition umfasst, in der sich eine optische Achse der Bildaufnahmevorrichtung in der Ebene befindet, die durch die Gierachse und die Rollachse definiert ist, und/oder mindestens eine schräge Winkelposition, in der sich die optische Achse in einer schiefen Ebene befindet, die mit der Ebene durch die Gierachse und die Rollachse einen Winkel ungleich Null bildet, und/oder wobei die zweite Sequenz die zentrierte Winkelposition und/oder mindestens eine schräge Winkelposition umfasst.

11. Verfahren zur dreidimensionalen Kartierung nach einem der vorhergehenden Ansprüche, wobei die erste Sequenz eine zentrierte Winkelposition umfasst, in der sich eine optische Achse der Bildaufnahmevorrichtung in der Ebene befindet, die durch die Gierachse und die Rollachse definiert ist, und/oder die zweite Sequenz die zentrierte Winkelposition umfasst.

12. Verfahren zur dreidimensionalen Kartierung nach einem der vorhergehenden Ansprüche, wobei die erste Sequenz mindestens eine schräge Winkelposition umfasst, in der sich die optische Achse in einer schiefen Ebene befindet, die mit der Ebene durch die Gierachse und die Rollachse einen Winkel ungleich Null bildet, und/oder wobei die zweite Sequenz mindestens eine schräge Winkelposition umfasst.

13. Verfahren zur dreidimensionalen Kartierung nach einem der vorhergehenden Ansprüche, umfassend das Messen der absoluten Ausrichtung der Bildaufnahmevorrichtung (8) für jedes aufgenommene Bild, vorzugsweise mithilfe einer an der Bildaufnahmevorrichtung angebrachten Trägheitszentrale (28).

14. Verfahren zur dreidimensionalen Kartierung nach einem der vorhergehenden Ansprüche, umfassend das Messen der geografischen Position der Bildaufnahmevorrichtung (8) für jedes aufgenommene Bild, beispielsweise mithilfe eines an Bord des Luftfahrzeugs (6) befindlichen Geolokalisierungsempfängers (24).

15. Selbstfliegendes Starrflügelluftfahrzeug, das mit einer Bildaufnahmevorrichtung (8) ausgestattet ist, die um eine Drehachse (B) beweglich an dem Luftfahrzeug angebracht ist, wobei das Luftfahrzeug für die Durchführung eines dreidimensionalen Kartierungsverfahrens nach einem der Ansprüche 1 bis 14 ausgelegt ist.

## Claims

1. A method for three-dimensional mapping of a geographical area comrpising capturing aerial images of a geographical area using a aircraft (6) self-piloted according to a predetermined flight plan and an image capture apparatus (8) mounted on the aircraft while being movable relative to the aircraft (6) around a rotation axis to make it possible to modify the angular position of the image capture apparatus (8) relative to the aircraft (6), the method comprising, during a single flyover of the geographical area by the aircraft:
- capturing a first series of images by positioning the image capture apparatus (8) relative to the aircraft (6) iteratively according to a first sequence of angular position(s) including a first angular position or at least two distinct angular positions, a respective image being captured for each angular position of the first sequence upon each iteration of the sequence; then
- capturing a second series of images by positioning the image capture apparatus (8) relative to the aircraft (6) iteratively according to a second sequence of angular position(s) including a first angular position or at least two distinct angular positions, a respective image being captured for each angular position of the second sequence upon each iteration of the sequence, the second sequence including at least one angular position distinct from each angular position of the first sequence,
the method comprising calculating a three-dimensional map of the geographical area from the captured images.

2. The three-dimensional mapping method according to claim 1, wherein the aircraft (6) is a fixed-wing aircraft.

3. The three-dimensional mapping according to claim 1 or claim 2, wherein the rotation angle (B) is contained in a plane defined by the yaw axis (Z) and the roll axis (X) of the aircraft (6), the rotation angle (B) defining an angle smaller than 15° with the roll axis (X).

4. The three-dimensional mapping method according to any one of the preceding claims, wherein the first series of images and the second series of images are captured during the flight of the aircraft (6) along a same straight flight line of the flight plan.

5. The three-dimensional mapping method according to any one of the preceding claims, wherein the first series of images and the second series of images are captured during the flight of the aircraft (6) along two distinct straight flight lines of the flight plan.

6. The three-dimensional mapping method according to any one of the preceding claims, wherein the first sequence is predetermined before the flight.

7. The three-dimensional mapping method according to any one of the preceding claims, wherein the second sequence is predetermined before the flight.

8. The three-dimensional mapping method according to any one of the preceding claims, wherein the second sequence is determined during the flight.

9. The three-dimensional mapping method according to any one of the preceding claims, wherein the second sequence is communicated to the aircraft during the flight, for example from a remote command station of the aircraft.

10. The three-dimensional mapping method according to any one of the preceding claims, wherein which first sequence comprises a centered angular position in which an optical axis of the image capture apparatus is located in the plane defined by the yaw axis and the roll axis and/or at least one oblique angular position in which the optical axis is located in an oblique plane forming a non-zero angle with the plane by the yaw axis and the roll axis, and/or in which the second sequence comprises the centered angular position and/or at least one oblique angular position.

11. The three-dimensional mapping method according to any one of the preceding claims, wherein the first sequence comprises a centered angular position in which an optical axis of the image capture apparatus is located in the plane defined by the yaw axis and the roll axis and/or the second sequence comprises the centered angular position.

12. The three-dimensional mapping method according to any one of the preceding claims, wherein the first sequence comprises at least one oblique angular position in which the optical axis is located in an oblique plane forming a non-zero angle with the plane defined by the yaw axis and the roll axis, and/or in which the second sequence comprises at least one oblique angular position.

13. The three-dimensional mapping method according to any one of the preceding claims, wherein the method comprises measuring the absolute orientation of the image capture apparatus (8) for each captured image, preferably using an inertial unit (28) mounted on the image capture apparatus.

14. The three-dimensional mapping method according to any one of the preceding claims, wherein the method comprises measuring the geographical position of the image capture apparatus (8) for each captured image, for example using a geolocation receiver (24) on board the aircraft (6).

15. A self-piloted fixed-wing aircraft equipped with an image capture apparatus mounted movably on the aircraft around a rotation axis, the aircraft being configured to implement a three-dimensional mapping method according to any one of claims 1-14.
